# EUROPEAN PATENT SPECIFICATION

(11) **EP 0 826 544 B1**
(45) Date of publication and mention of the grant of the patent: **21.11.2001**
(21) Application number: 96306388.8
(22) Date of filing: 03.09.1996
(51) Int. Cl.: B60K 6/04

(54) **Combined driving system comprising electrical machine and internal combustion engine**
Kombiniertes Antriebssystem mit Kraftmaschine und elektrischer Maschine
Système combiné d'entraînement à moteur électrique et moteur à combustion interne

(43) Date of publication of application: 04.03.1998
(73) Proprietor: Yang, Tai Her, Si-Hu Town, Dzan Hwa (TW)
(72) Inventor: Yang, Tai Her, Si-Hu Town, Dzan Hwa (TW)
(74) Representative: Pratt, David Martin

(56) References cited:
- EP-A- 0 724 978
- WO-A-93/23263
- US-A- 4 533 011
- US-A- 5 343 970

## Description

### 1. Field of the Invention

The present invention relates to an engine and electrical machine coupled through a clutch and control component.

### 2. Description of Related Art

In recent years, energy and noise pollution have become more and more serious problems, with electrical power driven carriers being considered as a potential solution. However, research and development of electrical power driven carriers has up to now been limited by the problem that increasing the capacity of the batteries to achieve a larger moving range increases the battery volume or number of batteries and consequently the weight of the carrier, resulting in greater electrical energy consumption and a failure to meet economic requirements. As a result, in the absence of a high breakthrough in solving battery technical problems, the more practical driving method is to use a combined driving structure.

US-A-5,343,970 discloses an arrangement in which an electrical motor is permanently connected to a load, via a torque-transfer unit, and an engine is connected to the load by an electronically-controlled clutch.

EP-A1-0724978 discloses a mechanical, speed-operated clutch in a hybrid machine.

### SUMMARY OF THE INVENTION

The present invention is accordingly a unique combined engine and electrical device as claimed in claim 1.

### BRIEF DESCRIPTION OF THE DRAWINGS

Figure 1 is a schematic drawing of a first preferred embodiment.

Figure 2 is a schematic drawing of a second preferred embodiment.

Figure 3 is a schematic drawing of a third preferred embodiment.

Figure 4 is a schematic drawing is a fourth preferred embodiment.

Figure 5 is a schematic drawing is a fifth preferred embodiment.

### DETAILED DESCRIPTION OF THE INVENTION

The key components of the combined driving structure of the invention are as follows:
- An eccentric clutch set FC101, FC102: preferably in the form of a double acting eccentric clutch constituted by two clutches embodied either in a multiple sleeve structure or in a common structure and incorporated into a three layers structure: including an inner layer, a middle layer and an external layer, wherein the inner layer is provided with a drive friction element to act outwardly when the force reaches a preset value so as to couple with an output shaft for mutual driving, the middle layer is combined with the engine and is provided with a drive friction element to act outwardly when the force reaches a present value so as to be friction coupled with the inner ring of the external layer to constitute an output clutch function, and the external layer structure is further combined with the engine for temporally releasing the linkage between the engine and the load when the engine is operated at a low speed.
- An electrical machine E101: which is a series or auxiliary compound excited electrical machine having the electrical characteristics which cause the rotational speed to increase with a corresponding decreasing load, or an AC or DC brush or brushless machine able to perform current control (including constant current control), to provide added torque functions following the load control.
- A drive controller D101 controlled by a manual operating interface M101 and a central controller CCU101 to operate the electrical machine as a motor to provide operations such as start, stop, speed change, or positive/reverse rotation; or to operate the electrical machine as a generator with controlled generation capacity.

These key components are combined in various preferred embodiments of the invention as follows:

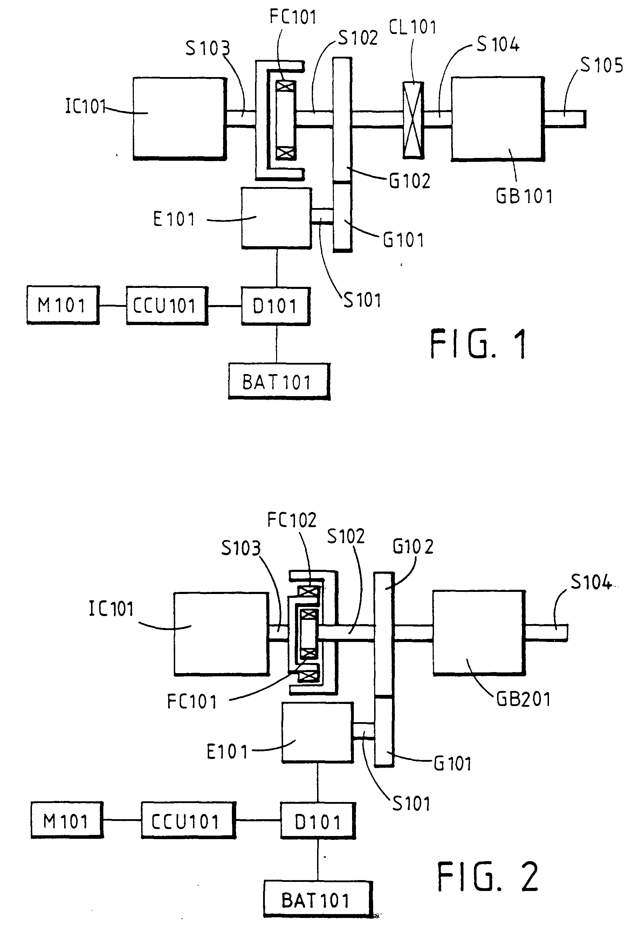

Figure 1 illustrates the first preferred embodiment of a speed controlled combined system and device in which the eccentric clutch FC101 and a second gear G102 are installed on a rotating shaft S102 between the drive shaft S103 of an engine IC101 and a load driving output shaft S104, wherein the output shaft S104 can be provided either to drive the load directly or to drive the load through an output clutch CL101 or a speed change mechanism GB101. In the illustrated example, the second gear G102 is engaged with a first gear G101, although the illustrated gear train can be placed by a multiple staged speed reducer or other transmission components such as chain wheels.

An electrical machine E101 is combined with the first gear G101 and is controlled by a manual operating interface M101, central controller CCU101, and drive control device D101 to cause the electrical machine E101 to be powered by a battery BAT101 in order to provide a motor output for driving the gear G101 as follows: The gear G101 is rotated at high speed to drive the eccentric clutch FC101 to close and start the engine IC101, whereupon the engine IC101 either drives the load directly or through the speed reducing device GB101, while electrical machine E101 is either powered to drive the load with the engine IC101 together or the power to the electrical machine can be cut off to cause the electrical machine to be in a waiting state, or the electrical machine can be driven by the engine IC101 to be operated as a generator to charge the battery BAT101 or supply power to other loads.

For the purpose of AC power generation, the electrical machine E101 may be either a permanent magnet or a winding excited, variable frequency driven field type electrical device, or a brushed alternator type electrical device, with its armature winding being commonly connected via conducting rings for AC output and commutators for DC input/output, and whereby the AC output can be a variable frequency output or a constant frequency output through the engine constant speed control. In the case of high sliding speed, the load feedback may be used to drive the engine IC101 to provide a friction damping brake and the electrical machine E101 used for regeneration feedback braking functions, while in the case of low speed drive, below the rotation speed of eccentric clutch coupled with engine, the electrical machine may be operated as a motor to drive the load, and in the case of a low sliding speed, the electrical machine may be operated as a generator to a provide braking function by recovering the kinetic energy to the battery, or to supply power to the other loads to provide the braking function. A summary of the operating states of the various components for each of the above-described function are shown in Table 1. Specifically, table 1 shows the operating states of engine IC101 and gear direction (clockwise (CW) or counterclockwise (CCW)), engine speed (Stop, 0 ∼ Max (running speed), and Max→0 (deceleration)), battery status (charge/discharge), electric machine operation (motor/generator), and clutch status (open/close) during the various functions selectable by manual control M101 and controller CCU101 as described above.

Figure 2 illustrates the second preferred embodiment of the invention in which the eccentric clutch set FC101, FC102 and the second gear G102 are installed between the drive shaft S103 of the engine IC101 and the load driving output shaft S104, wherein the output shaft S104 can be provided either to drive the load directly or to drive the load through the reducing gear train GB201. The second gear G102 is engaged with the first gear G 101, or the illustrated gear train can be replaced by a multiple staged speed reducer or other transmission components such as chain wheels, and the electrical machine E101 is combined with the first gear G101 and is controlled by the manual operating interface M101, central controller CCU101 and the drive control device D101 to be powered by the battery BAT101 to drive the gear G101. Electric machine E101 is again equipped with AC power generating functions and includes a permanent magnet, winding excited, variable frequency driven field type electrical device, or a brushed alternator type electrical device, with its armature winding commonly connected to conducting rings for AC output and to commutators for DC input/output, so that the AC output can be a variable frequency output or a constant frequency output through the engine constant speed control.

The double acting eccentric clutch set of this embodiment is constituted by the two eccentric clutches FC101 and FC102 embodied either in a sleeve joint structure or in a common structure, and is incorporated in a three layer structure including an inner layer, a middle layer and an external layer. The inner layer is provided with a drive friction disk to act outwardly when the eccentric force reaches a preset value and is combined with the output shaft for mutual driving. The middle layer is combined with the engine and is provided with an inner ring friction coupling surface while its outside is provided with a drive friction disk to act outwardly when the eccentric force reaches a preset value thereby to be friction coupled with the inner ring of the external layer to constitute an output clutch function, and the external layer structure is further combined with the engine for temporally releasing the linkage between the engine and the load when the engine is operated at a low speed.

This embodiment is controlled by the central controller CCU101, manual operating interface M101, electrical machine drive device D101, and the battery BAT101 to provide the following functions:
- start engine: The electrical machine E101 is rotated at high speed to drive the double acting clutch FC101, FC102, so that the inner layer drive friction disk is coupled with middle layer inner ring to start the engine:
   - Operation by engine: After the engine IC101 is started to drive the double acting clutch FC101, FC102, and when the speed of the middle ring structure is increased to a preset rotation speed, the outside drive friction disk of the middle layer is coupled with the external layer by the eccentric force to further drive the output shaft S104, thereby to drive the load directly or through the speed change mechanism and to drive the electrical machine E101 to be operated as a generator to charge the battery or to be waiting in a no-load operation at the OFF state, and when the engine speed is slowed down, the drive friction disk of the middle layer structure of the double acting eccentric clutch is withdrawn to cut off the connection with the output shaft and the engine is no-load operated.
   - Combined power drive: While the engine IC101 is operated to drive the load, the electrical machine E101 supplies power to also help drive the load to constitute a combined power drive.
   - Electric power drive: The electrical machine is powered by the battery BAT101 to operate at a low speed which is below the rotation speed of the inner layer drive friction disk of the double acting clutch FC101 and FC102 and the electrical machine E101 drives the load directly by electric power.
   - Kinetic energy recovery at low sliding speed: When the load is sliding and the rotation speed of the driven output shaft S104 is below the rotation speed of the inner layer drive friction disk of the double acting eccentric clutch FC101 and FC102, then the electrical machine E101 is operated as a generator to provide regenerative braking for charging the battery.
   - The kinetic energy recovery at high sliding speed: When the load is sliding at high speed and the rotation speed of the driven output shaft S104 is higher than the rotation speed of the inner layer drive friction disk of the double acting eccentric clutch FC101 and FC102, the inner layer and the middle layer are thereby coupled, and the engine IC101 is dragged to provide friction damping. The electrical machine E101 is also driven to operate as a generator to provide regenerative braking for charging the battery BAT101.

These functions are summarized in Table 2, which gives the specific operating states for the functions described above. Table 2 is identical to Figure 1, except that the status of both clutches FC101 and FC102 is given in this table.

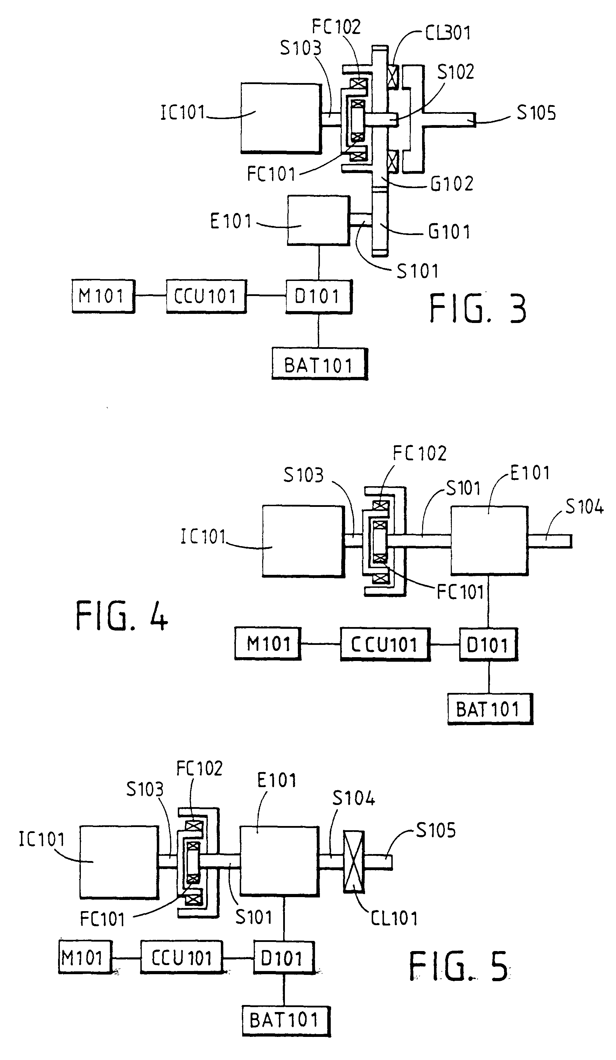

Figure 3 shows the third preferred embodiment of the invention, in which an output clutch CL301 is further installed between the second gear G102 and the output shaft S102 driven by the inner and external rings of the double acting eccentric clutch FC101, FC102, identical to that of the embodiment illustrated in Figure 2, and the output shaft S105 for driving the load or the speed reducing mechanism, to thereby link or separate the two output shafts. The clutch CL301 is driven manually or by electromagnetic or fluid power, and when it is closed, this embodiment has the same functions as are described above in connection with the second preferred embodiment. When the clutch CL301 is released, however, this embodiment has the following additional function of generation at stand-still, in which the engine IC101 drives the middle layer and the external layer of the double acting clutch FC101, FC102 to be coupled, thereby to driving the electrical machine E101 to be operated as a generator to charge the battery or supply power to other loads, in which case the power generation can be further controlled by timing or capacity.

Electric machine E101 is again comprised of a permanent magnet or a winding excited, variable frequency driven field type electrical device, or a brushed alternator type electrical device, in which its armature winding is commonly connected to conducting rings for AC output and to commutators for DC input/output, and whereby the AC output can be a variable frequency output or a constant frequency output through the engine constant speed control.

These functions are summarized in Table 3, which gives the specific operating states of the various system components for each of the functions described above in connection with the third preferred embodiment of the invention. This table differs from Table 2 in its inclusion of operating states for clutch CL301.

Figure 4 illustrates the fourth preferred embodiment of the invention, in which the output shafts of the electrical machine E101 and the engine IC101 are embodied in a common shaft structure, while the double acting clutch FC101, FC102 is installed between the electrical machine E101 and the engine IC101 and has its inner layer and external layer coupled with the common shaft S101 of the electrical machine E101 and the output shaft S104, while its middle layer is coupled with the engine rotating shaft S103, and the operation types include the following:
- The electrical machine E101 is operated at high speed to start the engine through the control of the manual operating interface M101, central controller CCU101, drive control device D101; and after the engine is started, driving of the electrical machine E101 is continued to help drive the load with the engine together, or the electrical machine is operated as a generator to charge the battery or supply power to the other loads. As in the previous embodiment, the electrical machine E101 is selected to be comprised of a permanent magnet or winding excited, variable frequency driven field type electrical device, or a brushed alternator type electrical device, having an armature winding commonly connected to the conducting rings for AC output and to commutators for DC input/output, whereby the AC output can be a variable frequency output or a constant frequency output through the engine constant speed control; or can be operated as a motor and controlled as to rotation directions and rotational speeds, or can be cut off by a transmission to remain in a waiting state;
- The electrical machine E101 is controlled to be operated a low speed, below the required rotation speed for the inner layer drive friction disk to couple with the middle layer inner ring of the double acting clutch, and the electrical machine drives the load by the electric power.
- The kinetic energy recovery at low sliding speed: When the load is sliding and the rotation speed of the driven output shaft S104 is below the rotation speed of the inner layer drive friction disk of the double acting eccentric clutch FC101 and FC102, then the electrical machine E101 is operated as a generator to provide regenerative braking by charging the battery.
- Engine friction damping and kinetic energy recovery at high sliding speed: When the load is sliding at high speed and the rotation speed of the driven output shaft S104 is higher than the rotation speed of the inner layer drive friction disk of the double acting eccentric clutch FC101 and FC102, the inner layer and the middle layer are thereby coupled, and the engine IC101 is dragged to provide friction damping. The electrical machine E101 is also driven to operated as a generator to provide regenerative braking by charging the battery BAT101.

The above said functions are summarized in Table 4, which gives the specific operating status of the various system components for each of the functions described above in connection with the fourth preferred embodiment of the invention. Figure 5 shows the fifth preferred embodiment of the invention, in which a clutch CL101 is further installed between the output shaft S104 and the loading shaft S105 described in connection with the embodiment of Figure 4, and the clutch is driven manually or by electromagnetic or fluid power, such that when it is closed, the combined system has the same functions as the fourth embodiments, and when the clutch CL101 is released, the combined system has the additional function of generation at stand-still, in which the engine IC101 drives the middle layer and the external layer of the double acting clutch FC101, FC102 to be coupled, to thereby further drive the electrical machine E101 to be operated as a generator to charge the battery BAT101 or supply power to other loads, with the electrical machine E101 being selected to be comprised of a permanent magnet or a winding excited, variable frequency driven field type electrical device, or a brushed alternator type electrical device, with its armature winding commonly connected to a conducting rings for AC output and to commutators for DC input/output, whereby the AC output can be a varied frequency output or a constant frequency output through the engine constant speed control and its generation function can be further controlled by timing or capacity.

These functions are summarized in Table 5 which gives the specific generating states of the various system components for each of the functions described above in connection with the fifth preferred embodiments of the invention. The above embodiments have in common that the electrical machine and the engine constitute a combined power, multiple functioned driving system through a particular transmission structure which employs the relationship between the electrical machine rotation speed and the eccentric clutch changeover point to cause the electric motor and/or the engine to drive the load. For city driving conditions of frequent waiting in crowded traffic, this design provides a high efficiency, low pollution electric vehicle.

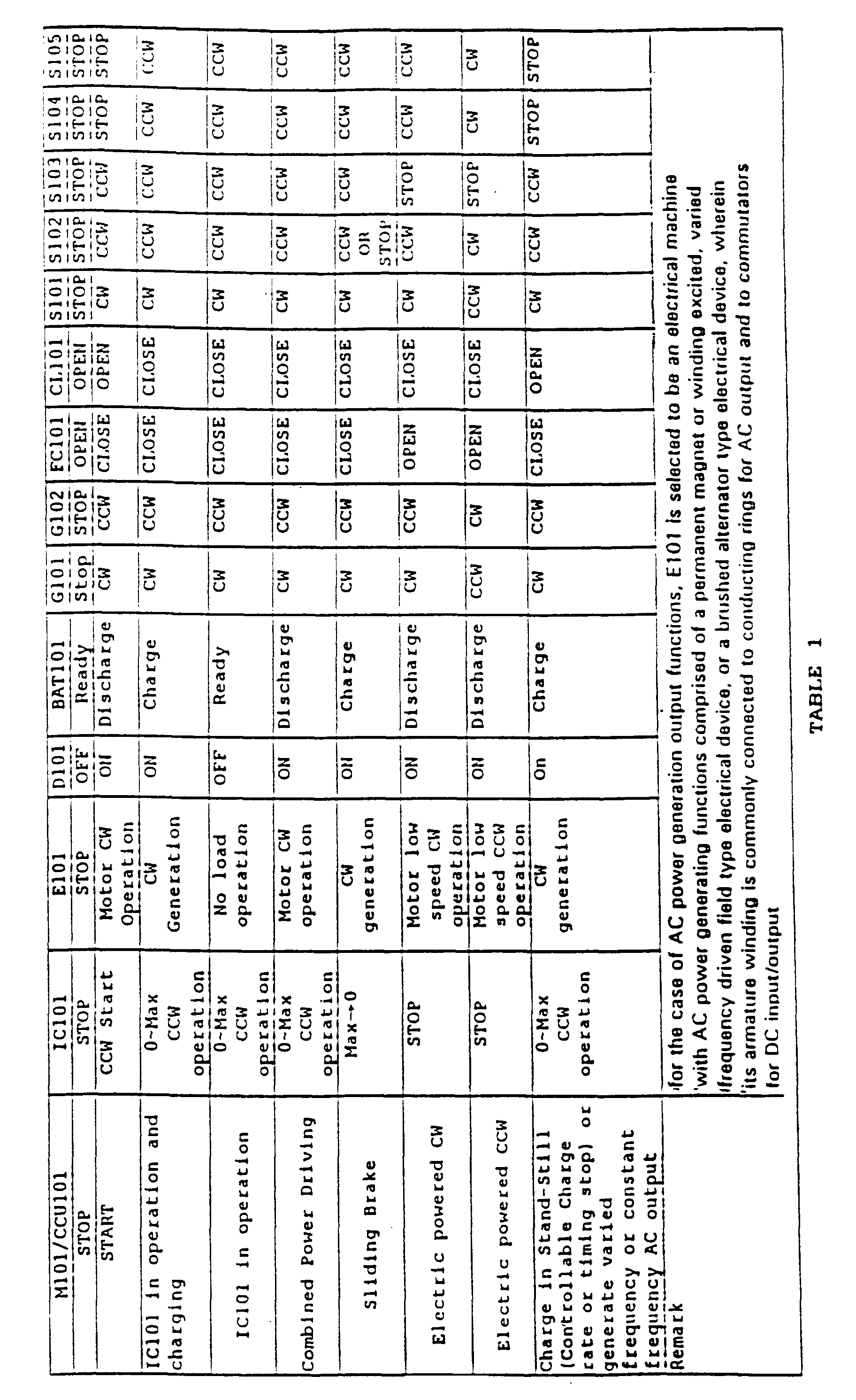

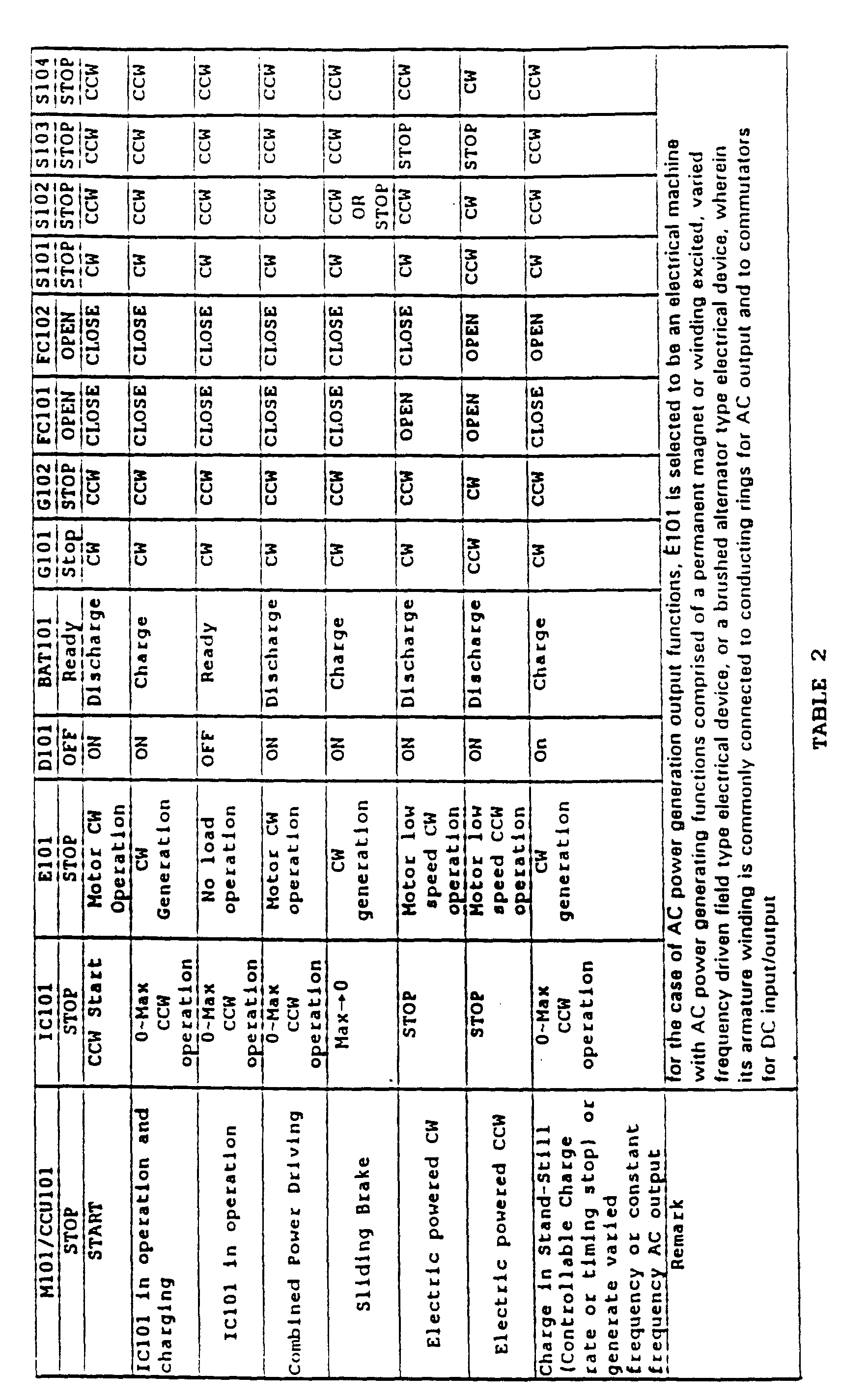

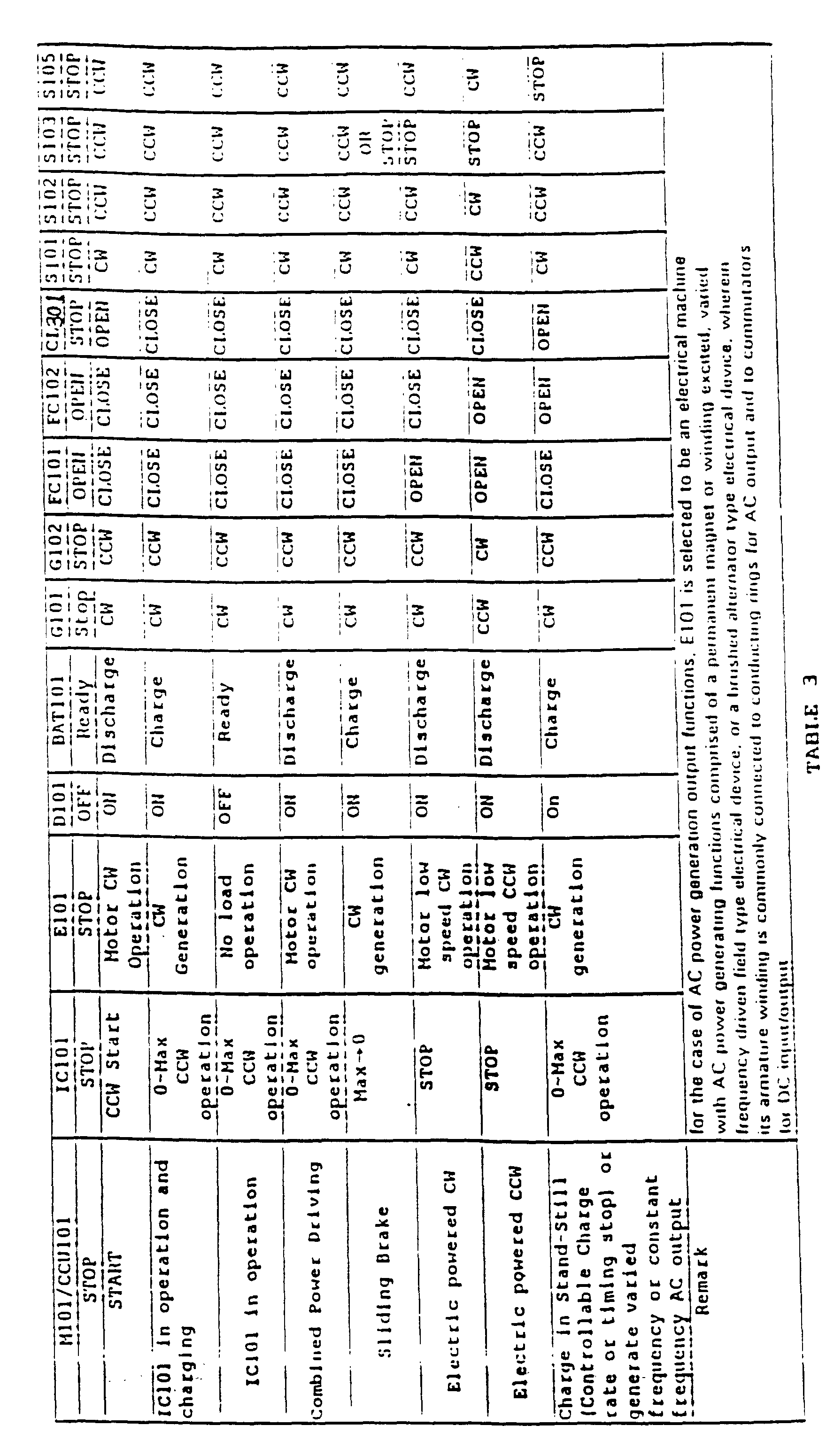

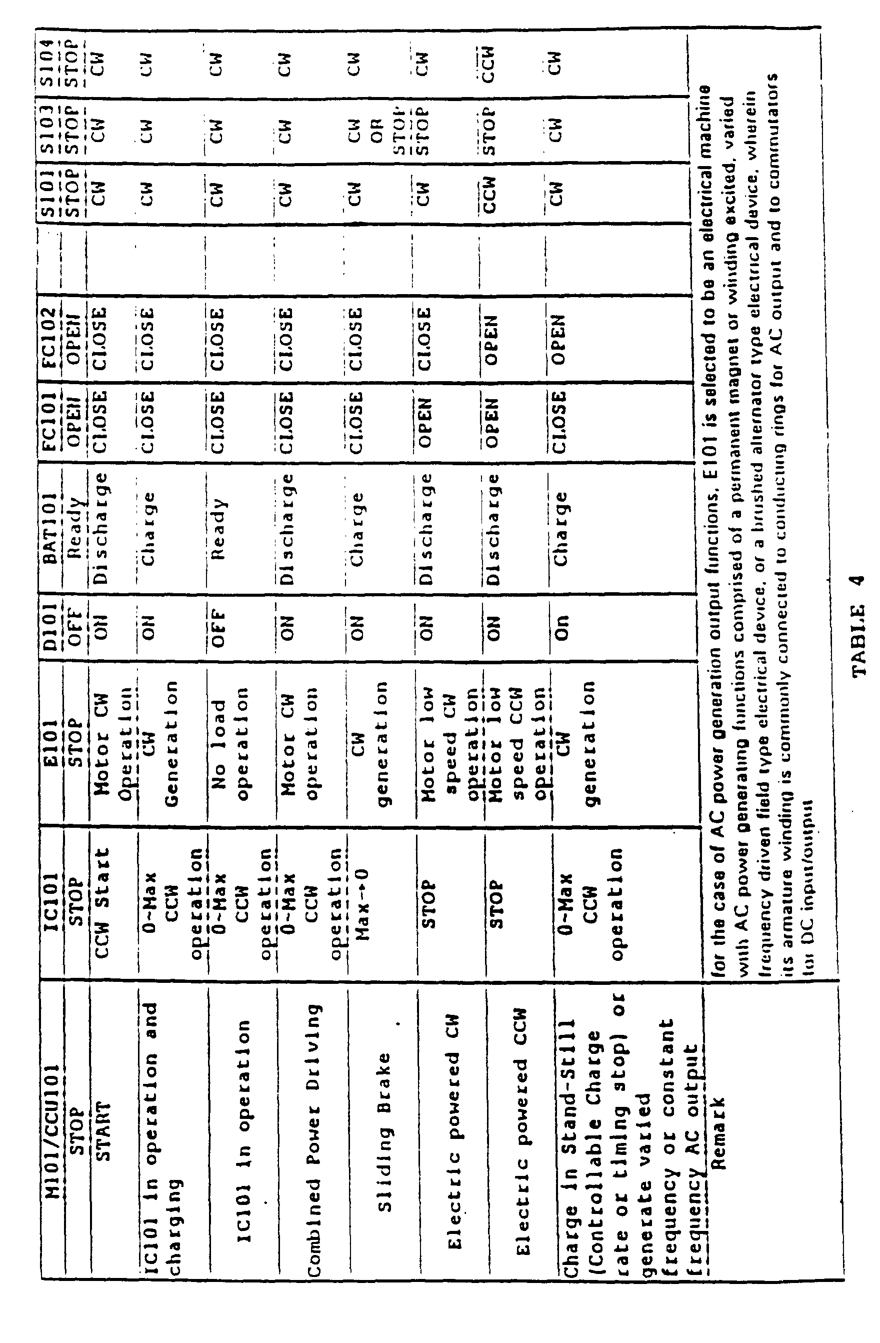

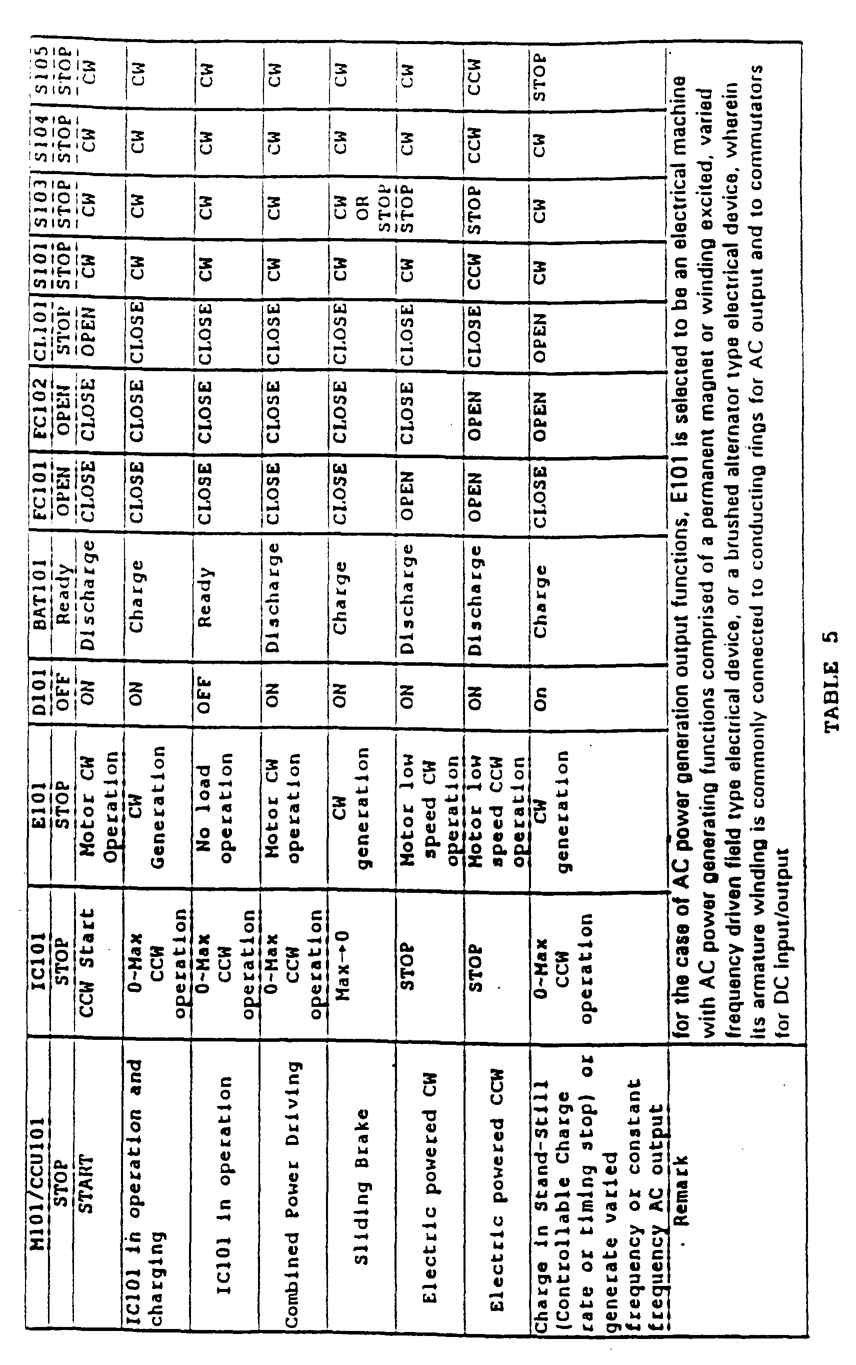

## Claims

1. A combined engine and electrical device, comprising:
an engine (IC101);
an electrical machine (E101);
means including a clutch (FC101; FC102) having a drive friction element acting outwardly when the force reaches a pre-set value so as to couple with a shaft for mutual driving; the shaft being an output shaft (S105) for connecting the engine and the electrical machine to a load;
a battery (BAT101) connected to the electrical machine; and
means (M101, CCU101, D101) for controlling the electrical machine and the engine comprising:
a) means for operating the electrical machine as a motor powered by electricity from the battery, at a speed sufficient to cause the clutch to close, thereby connecting the electrical machine (E101) to the engine and causing the electrical machine to function as a starter for the engine;
b) means for, when the engine is running, operating the electrical machine to drive the load together with the engine; and
c) means for operating the electrical machine as a motor powered by electricity from the battery, at a speed insufficient to cause the clutch to close, in order to drive the load while the engine is stopped.

2. A device as claimed in claim 1, wherein the clutch is a two-way clutch (FC202) arranged to close and connect the electrical machine (E101) to the engine (IC101) upon rotation at a sufficient speed of either the electrical machine or the engine, and wherein the means for controlling the electrical machine and the engine further carries out the function of operating the electrical machine as a regenerative brake for charging the battery (BAT101).

3. A device as claimed in claim 2, wherein the means for controlling the electrical machine (E101) and the engine (IC101) further carries out the function of causing the engine to drive the electrical machine to operate as a generator to charge the battery (BAT101).

4. A device as claimed in any preceding claim, wherein the clutch is a two-way clutch arrangement (FC202) arranged to close and connect the electrical machine (E101) to the engine (IC101) upon rotation at a sufficient speed of either the electrical machine or the engine, and wherein the means for controlling the electrical machine and the engine further carries out the function of operating the electrical machine as a motor while the engine is running at a speed sufficient to cause the clutch to close, whereby the electrical machine and the engine together drive the load.

5. A device as claimed in any preceding claim wherein the electrical machine (E101) is connected to the eccentric clutch arrangement (FC101, FC202) by means of a gear train (G101, G102), and further comprising a second clutch (CL101) positioned between the gear train and the output shaft (S105).

6. A device as claimed in any preceding claim, further comprising a speed change mechanism (GB101) connected between the clutch (FC101, FC102) and the output shaft (S105).

7. A device according to any preceding claim, further comprising means for, when the load is slipping at a low rotation rate, recovering excess kinetic energy by driving the electrical machine (E101) as a generator to charge the battery (BAT101) and without any friction braking from the engine (IC101); and means for, when the load is slipping at a high rotation rate, recovering excess kinetic energy by driving the electrical machine as a generator to charge the battery and to provide friction damping from the engine.

## Patentansprüche

1. Kombination aus Triebwerk und elektrischer Vorrichtung, umfassend:
ein Triebwerk (IC101);
eine Einrichtung mit einer Kupplung (FC101; FC102) mit einem Antriebsreibelement, welches nach außen wirkt, wenn die Kraft einen vorbestimmten Wert erreicht, so dass eine Verbindung mit einer Welle zum wechselseitigen Antrieb erfolgt;
wobei die Welle eine Ausgangswelle (S105) zur Verbindung des Triebwerks und der elektrischen Maschine mit einer Last ist;
eine Batterie (BAT101), welche mit der elektrischen Maschine verbunden ist; und
eine Einrichtung (M101, CCU101, D101) zum Steuern der elektrischen Maschine und des Triebwerks, umfassend:
a) eine Einrichtung zum Betreiben der elektrischen Maschine als Motor, gespeist mit Elektrizität von der Batterie, bei einer Drehzahl, welche ausreicht, ein Schließen der Kupplung zu bewirken, wodurch die elektrische Maschine (E101) mit dem Triebwerk verbunden wird und bewirkt wird, dass die elektrische Maschine als Starter für das Triebwerk dient;
b) eine Einrichtung, welche, wenn das Triebwerk läuft, die elektrische Maschine derart betreibt, dass sie die Last zusammen mit dem Triebwerk antreibt; und
c) eine Einrichtung zum Betreiben der elektrischen Maschine als Motor, gespeist mit Elektrizität von der Batterie, bei einer Drehzahl, welche nicht ausreicht, ein Schließen der Kupplung zu bewirken, um die Last anzutreiben, während das Triebwerk gestoppt ist.

2. Vorrichtung nach Anspruch 1, wobei die Kupplung eine Zweiwege-Kupplung (FC202) ist, welche derart angeordnet ist, dass sie schließt und die elektrische Maschine (E101) mit dem Triebwerk (IC101) verbindet, wobei dies bei einer Drehung mit einer ausreichenden Drehzahl entweder der elektrischen Maschine oder des Triebwerks erfolgt, und wobei die Einrichtung zum Steuern der elektrischen Maschine und des Triebwerks ferner die Funktion eines Betreibens der elektrischen Maschine als Bremse mit Energierückgewinnung zum Laden der Batterie (BAT101) ausführt.

3. Vorrichtung nach Anspruch 2, wobei die Einrichtung zum Steuern der elektrischen Maschine (E101) und des Triebwerks (IC101) ferner die Funktion eines Bewirkens, dass das Triebwerk die elektrische Maschine derart antreibt, dass sie als Generator zum Laden der Batterie (BAT101) arbeitet, ausführt.

4. Vorrichtung nach einem beliebigen der vorhergehenden Ansprüche, wobei die Kupplung eine Zweiwege-Kupplungsanordnung (FC202) ist, welche angeordnet ist, um zu schließen und die elektrische Maschine (E101) mit dem Triebwerk (IC101) zu verbinden, wobei dies bei einer Drehung mit einer ausreichenden Drehzahl entweder der elektrischen Maschine oder des Triebwerks erfolgt, und wobei die Einrichtung zum Steuern der elektrischen Maschine und des Triebwerks ferner die Funktion eines Betreibens der elektrischen Maschine als Motor ausführt, während das Triebwerk bei einer Drehzahl läuft, welche ausreichend ist, um zu bewirken, dass die Kupplung schließt, wodurch die elektrische Maschine und das Triebwerk die Last zusammen antreiben.

5. Vorrichtung nach einem beliebigen der vorhergehenden Ansprüche, wobei die elektrische Maschine (E101) mit der Exzenterkupplungsanordnung (FC101, FC202) mittels eines Zahnrädersatzes (G101, G102) verbunden ist und ferner eine zweite Kupplung (CL101) umfasst, welche zwischen dem Zahnrädersatz und der Ausgangswelle (S105) angeordnet ist.

6. Vorrichtung nach einem beliebigen der vorhergehenden Ansprüche, ferner umfassend eine Drehzahländerungsvorrichtung (GB101), welche zwischen die Kupplung (FC101, FC102) und die Ausgangswelle (S105) geschaltet ist.

7. Vorrichtung nach einem beliebigen der vorhergehenden Ansprüche, ferner umfassend eine Vorrichtung, welche, wenn die Last bei niedriger Drehzahl rutscht, überschüssige kinetische Energie wiedergewinnt, indem die elektrische Maschine (E101) als Generator zum Laden der Batterie (BAT101) und ohne irgendeine Reibungsbremsung vom Triebwerk (EC101) betrieben wird; und eine Einrichtung, welche, wenn die Last bei hoher Drehzahl rutscht, überschüssige kinetische Energie wiedergewinnt, indem die elektrische Maschine als Generator betrieben wird, um die Battewird, um die Batterie zu laden und eine Reibungsdämpfung vom Triebwerk zu liefern.

## Revendications

1. Dispositif électrique et moteur combinés, comprenant :
. un moteur (IC101) ;
. une machine électrique (E101) ;
. des moyens comprenant un embrayage (FC101, FC102) comportant un élément d'entraînement à friction agissant vers l'extérieur lorsque la force atteint une valeur préréglée de façon à se coupler avec un arbre pour entraînement mutuel ; l'arbre étant un arbre de sortie (S102) pour connecter le moteur et la machine électrique à une charge ;
. une batterie (BAT101) connectée à la machine électrique ; et
. des moyens (M101, CCU101, D101) pour commander la machine électrique et le moteur se composant :
a) de moyens pour faire fonctionner la machine électrique en tant que moteur alimenté par l'électricité de la batterie, à une vitesse suffisante pour provoquer la fermeture de l'embrayage, connectant ainsi la machine électrique (E101) au moteur et provoquant le fonctionnement de la machine électrique en tant que démarreur pour le moteur ;
b) de moyens pour, lorsque le moteur est en marche, faire fonctionner la machine électrique en entraînement simultané de la charge et du moteur ; et
c) de moyens pour faire fonctionner la machine électrique en tant que moteur alimenté par l'électricité de la batterie, à une vitesse insuffisante pour provoquer la fermeture de l'embrayage, de façon à entraîner la charge pendant que le moteur est arrêté.

2. Dispositif selon la revendication 1, **caractérisé en ce que** l'embrayage est un embrayage à double effet (FC202) prévu pour fermer et accoupler la machine électrique (E101) au moteur (IC101) à un régime correspondant à une vitesse suffisante soit de la machine électrique, soit du moteur, et **en ce que** les moyens pour commander la machine électrique et le moteur réalisent en outre la fonction pour la machine électrique de se comporter comme un frein à restitution d'énergie pour charger la batterie (BAT101).

3. Dispositif selon la revendication 2, **caractérisé en ce que** les moyens pour commander la machine électrique (E101) et le moteur (IC101) réalisent en outre la fonction d'entraîner la machine électrique par le moteur pour fonctionner en tant que générateur afin de charger la batterie (BAT101).

4. Dispositif selon l'une quelconque des revendications précédentes, **caractérisé en ce que** l'embrayage est un embrayage à double effet (FC202) prévu pour fermer et accoupler la machine électrique (E101) au moteur (IC101) à un régime correspondant à une vitesse suffisante soit de la machine électrique, soit du moteur, et **en ce que** les moyens pour commander la machine électrique et le moteur réalisent en outre la fonction de faire fonctionner la machine électrique en tant que moteur lorsque le moteur est en marche à une vitesse suffisante pour provoquer la fermeture de l'embrayage, la machine électrique et le moteur entraînant alors simultanément la charge.

5. Dispositif selon l'une quelconque des revendications précédentes, **caractérisé en ce que** la machine électrique (E101) est connectée au dispositif d'embrayage excentré (FC101, FC202) au moyen d'un train d'engrenage (G101, G102), et **caractérisé en ce qu'**il comprend en outre un second embrayage (CL101) placé entre le train d'engrenage et l'arbre de sortie (S105).

6. Dispositif selon l'une quelconque des revendications précédentes, **caractérisé en ce qu'**il comprend en outre un mécanisme de changement de vitesse (GB101) connecté entre l'embrayage (FC101, FC102) et l'arbre de sortie (S105).

7. Dispositif selon l'une quelconque des revendications précédentes, **caractérisé en ce qu'**il comprend en outre des moyens pour, lorsque la charge patine à faible régime, récupérer l'excès d'énergie cinétique en entraînant la machine électrique (E101) en tant que générateur pour charger la batterie (BAT101) et sans aucun freinage à friction de la part du moteur (IC101) ; et des moyens pour, lorsque la charge patine à régime élevé, récupérer l'excès d'énergie cinétique en entraînant la machine électrique en tant que générateur pour charger la batterie et pour fournir un amortissement à friction de la part du moteur.
